# EUROPEAN PATENT APPLICATION

(11) **EP 4 503 071 A2**
(43) Date of publication of application: **05.02.2025**
(21) Application number: 24789032.0
(22) Date of filing: 11.04.2024
(51) Int. Cl.: H01F 27/24, H01F 17/04, H01F 38/08, H01F 3/00

(54) **TRANSFORMER CORE, POWER CONVERSION APPARATUS INCLUDING TRANSFORMER CORE, AND PHOTOVOLTAIC MODULE INCLUDING POWER CONVERSION APPARATUS**

(30) Priority: 12.04.2023 KR 20230048100
(71) Applicant: Hanwha Solutions Corporation, Jung-gu Seoul 04541 (KR)
(72) Inventor: KANG, Youn Jong, Seoul 04541 (KR); JUNG, Kyung Su, Seoul 04541 (KR); LEE, Su Chang, Seoul 04541 (KR); YUN, Ju Hwan, Seoul 04541 (KR)
(74) Representative: Mooser, Sebastian Thomas
(86) International application number: PCT/KR2024/004817
(87) International publication number: WO 2024/215090

(57) **Abstract**

A transformer core having an advantageous shape in terms of processing is disclosed. The present invention provides a transformer core including a body in which an inner wall, a middle wall, and an outer wall are formed from a center, a first wire is wound between the inner wall and the middle wall, and a second wire is wound between the middle wall and the outer wall, the transformer core comprising: a first body in which the inner wall and a portion of the outer wall protrude from a base; and a second body in which the middle wall and a remaining portion of the outer wall protrude from a base such that the second body is overlapped with the first body to thereby be combined to the first body, a power converter including the transformer core, and a solar module including the same.

## Description

### Technical Field

The present invention relates to a transformer core, a power converter including the transformer core, and a solar module including the same, and more particularly, to a transformer core having an advantageous shape in terms of processing, a power converter including the transformer core, and a solar module including the same.

### Background Art

In general, power converters are adapted to provide power to solar modules that produce renewable energy. Particularly, transformers, leakage inductors, etc. are used in the converter for converting direct current power produced from solar modules, etc.,

Further, when using a general resonant transformer, the winding space of the transformer is divided into an upper layer and a lower layer, and an air gap is placed in the middle of the upper layer and the lower layer. However, in such a case, there is a disadvantage that it is not easy to control the leakage inductance as the central core space is fixed.

Furthermore, there is a disadvantage of occupying a considerable amount of space when the transformer and the leakage inductor are respectively mounted on a circuit board.

Accordingly, efforts are being made to miniaturize the size of transformers and leakage inductors for miniaturizing power converters, and in particular, research is conducted on the integrated transformers in which the transformer and leakage inductor are designed to integrate with each other.

For determining the amount of leakage inductance in the transformer having the leakage inductance, a gap need be processed, so there is provided a space (Area2) in which the gap is processed between an outer space (Area3) and an inner space (Area1) in the transformer core and a process for only processing a specific space has to be performed.

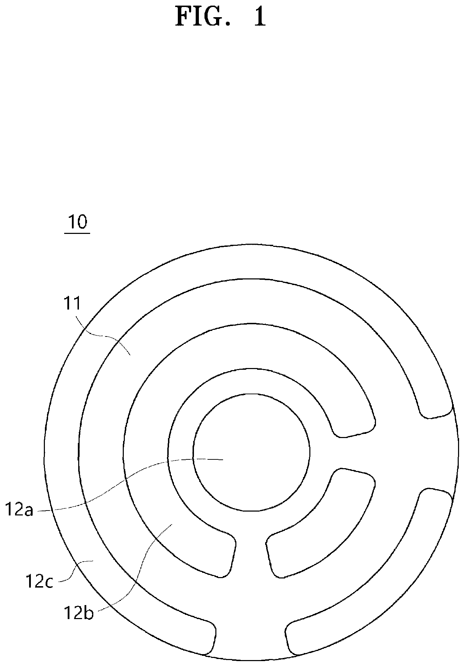

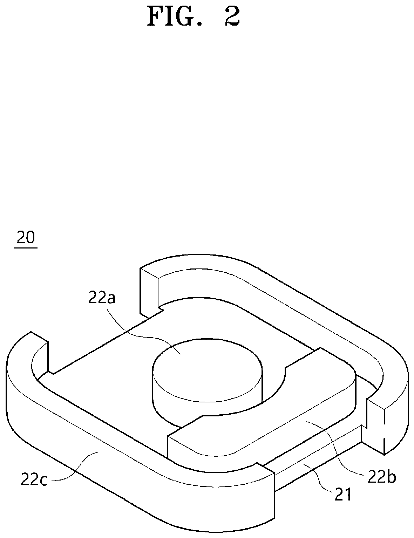

According to the conventional transformer core as referred to FIGS. 1 and 2, an outer space 12c or 22c, a middle space 12b or 22b, and an inner space 12a or 22a protruding from a base 11 or 21 have the same or similar height, an outer height and an inner height of the core 10 or 20 are the same, and a part of gap process is in a specific space inside. Furthermore, only a specific space is processed for the processing, and in such a case, the inside and the outside may be processed together.

That is, since the shape of the top and bottom of the transformer is the same and the height of the external transformer core is the same as the height of the internal transformer core and a specific space only need be processed for processing the internal transformer core, it is difficult to perform a milling process, etc. and finally, there is a problem in that the mass production is impossible and thus the unit cost of production becomes high.

### Disclosure

### Technical Problem

The present invention is provided for solving the above problems, and an object of the present invention is to provide a transformer core designed to allow a milling process in which a gap space for a gap process and an outer space of the transformer are able to be opened or closed by designing the shapes of the upper core and the lower core of the transformer to be different from each other.

The objects of the present invention are not limited to the above-described objects, and other objects which are not mentioned will be more definitely understood through the descriptions below by those skilled in the art.

### Technical Solution

According to an aspect of the present invention, there is provided a transformer core including a body in which an inner wall, a middle wall, and an outer wall are formed from a center, a first wire is wound between the inner wall and the middle wall, and a second wire is wound between the middle wall and the outer wall, the transformer core comprising a first body in which the inner wall and a portion of the outer wall protrude from a base and a second body in which the middle wall and a remaining portion of the outer wall protrude from a base, the second body being overlapped with the first body to thereby be combined to the first body.

In some embodiments, an area of a first surface of the outer wall of the first body may be defined as a first area, an area of a second surface of the outer wall of the second body may be defined as a second area, an area of a third surface of the middle wall may be defined as a third area, an area of a fourth surface of the inner wall may be defined as a fourth area, and a sum of the first area, the second area, and the third area may be relatively greater than the fourth area.

In some embodiments, the outer wall and the middle wall of the second body may be formed to protrude from the base, a height of the middle wall protruding from the base may be defined as a first height, a height of the outer wall of the second body protruding from the base may be defined as a second height, and the first height may be relatively smaller than the second height.

In some embodiments, a portion of the middle wall may be formed to be in parallel with a portion of the outer wall of the second body.

In some embodiments, a pair of the outer walls may be provided in the second body and arranged at both sides of the middle wall in parallel therewith.

In some embodiments, a pair of the outer walls may be provided in the first body and arranged at a front side and a rear side of the middle wall formed in the second body in parallel therewith, when the first body and the second body are combined to each other.

In some embodiments, a pair of the outer walls may be provided in the second body and arranged at a front side and a rear side of the middle wall in parallel therewith.

In some embodiments, a pair of the outer walls may be provided in the first body and arranged at both sides of the middle wall formed in the second body in parallel therewith, when the first body and the second body are combined.

In some embodiments, the inner wall may have a greatest thickness among the inner wall, the middle wall, and the outer wall.

In some embodiments, heights of the outer walls formed on each of the first body and the second body may be the same.

In some embodiments, an entrance through which the first wire and the second wire enter and exit may be formed by partially cutting off the outer wall and the middle wall.

In some embodiments, the entrance may be formed in the same direction at the outer wall and the middle wall.

In some embodiments, a width of the entrance at the outer wall may be the same as a width of the entrance at the middle wall.

In some embodiments, an outer circumferential surface of the inner wall facing the entrance may be formed to be curved.

In some embodiments, a corner of the outer wall of the first body may contact a corner of the outer wall of the second body.

In some embodiments, in a state that the first body and the second body are combined with each other, an inner circumferential surface of the corner of the outer wall may be formed to be curved.

In some embodiments, a portion of the outer wall of the first body and a portion of the outer wall of the second body may be arranged at a right angle with respect to each other.

According to an aspect of the present invention, there is provided a power converter including the transformer core.

In some embodiments, the power converter may further include a first wire wound between the inner wall and the middle wall formed in the transformer core; and a second wire wound between the middle wall and the outer wall formed in the transformer core.

According to an aspect of the present invention, there is provided a solar module including the power converter having the transformer core.

### Advantageous Effects

According to the structures described above, the transformer core according to an embodiment of the present invention is in a shape in which the milling process is performed, to thereby be capable of being mass-produced and reduce the unit cost significantly.

Furthermore, the transformer core according to an embodiment of the present invention has advantages of designing a wide space for controlling the leakage inductance as it is easy to perform the gap process for controlling the leakage inductance.

### Description of Drawings

FIG. 1 is a view showing one type of a transformer core according to the prior art.
FIG. 2 is a view showing another type of transformer core according to the prior art.
FIG. 3 is an exploded perspective view of a transformer core according to an embodiment of the present invention.
FIG. 4 is a perspective view of a second body that is a component of a transformer core according to an embodiment of the present invention.
FIG. 5 is an operational view showing a direction of the magnetic flux according to the current flow in the first wire of the transformer core according to an embodiment of the present invention.
FIG. 6 is an operational view showing a direction of the magnetic flux corresponding to the current flow in the second wire of the transformer core according to an embodiment of the present invention.
FIG. 7 is an operational view showing a direction of the magnetic flux corresponding to the current flow in both the first wire and the second wire of the transformer core according to an embodiment of the present invention.
FIG. 8 is a circuit diagram to which the transformer core according to an embodiment of the present invention is applied.
FIG. 9 is a circuit diagram of a dual active bridge converter to which a transformer core according to an embodiment of the present invention is applied.

### Best Mode

Hereinafter, embodiments of the present invention will be described in detail with reference to the accompanying drawings such that those skilled in the art easily implements the present invention. The present invention may be implemented in many different forms and is not limited to the embodiments described herein. In order to clearly describe the present invention, some parts or components unrelated to the description are omitted in the drawings, and the same reference numerals are designated to the same or similar components throughout the specification.

The words and terms used in the present specification and claims are not to be construed as limited in their usual or dictionary meanings and should be interpreted as meanings and concepts consistent with the technical idea of the present invention in accordance with the principle that the inventor may define terms and concepts in order to explain his or her invention in the best way.

Therefore, the embodiments described in the present specification and the configuration illustrated in the drawings correspond to a preferred embodiment of the present invention, and do not represent the entire technical idea of the present invention, so the corresponding configuration may have various equivalents and modified examples that may be replaced with at the time of filing of the present invention.

In the present specification, terms such as "include" and "have" are intended to describe the existence of features, numbers, steps, operations, components, parts, or combinations thereof described in the specification, and should be understood not to exclude in advance the possibility of the presence or addition of one or more other features, numbers, steps, operations, components, parts or combinations thereof.

The presence of one component in the "front", "rear", "above", or "below" another component, unless there are special circumstances, includes not only being arranged in the "front", "rear", "above", or "below" in direct contact with another component, but also cases where still another component is arranged in the middle. Furthermore, the fact that a component is "connected" to another component includes not only being directly connected to each other, but also indirectly connected to each other, unless there are special circumstances.

Hereinafter, the transformer core 100 according to an embodiment of the present invention is described with reference to the drawings.

Referring to FIGS. 1 to 7, the transformer core 100 according to an embodiment of the present invention may include bodies 110 and 120 in which an inner wall 112a, an middle wall 122b, and an outer wall 112c and 122c are formed from the center such that a first wire is wound between the inner wall 112a and the middle wall 122b and a second wire is wound between the middle wall 122b and the outer wall 112c and 122c.

The transformer core 100 according to an embodiment of the present invention may include a first body 110 and a second body 120.

Referring to FIGS. 1 to 7, the first body 110 may be formed by the inner wall 112a and a portion of the outer wall 112c protruding from the base 111.

In some embodiments, the entire inner wall 112a may be formed in the first body 110 and a part of the outer wall 112c may be formed, while a middle wall such as the middle wall 122b formed in the second body 120 is not formed between the inner wall 112a and the outer wall 112c.

In some embodiments, a portion of the outer wall 112c of the first body 110 and a portion of the outer wall 122c of the second body 120 may be formed at a right angle with respect to each other.

That is, a portion of the outer wall 112c formed in the first body 110 may be formed to be perpendicular to a longitudinal direction, and a portion of the outer wall 122c formed in the second body 120 may be formed to be parallel with the longitudinal direction. When the first body 110 and the second body 120 are combined with each other, the outer walls 112c and 122c may come into close contact with each other to form a single outer wall 112c and 122c.

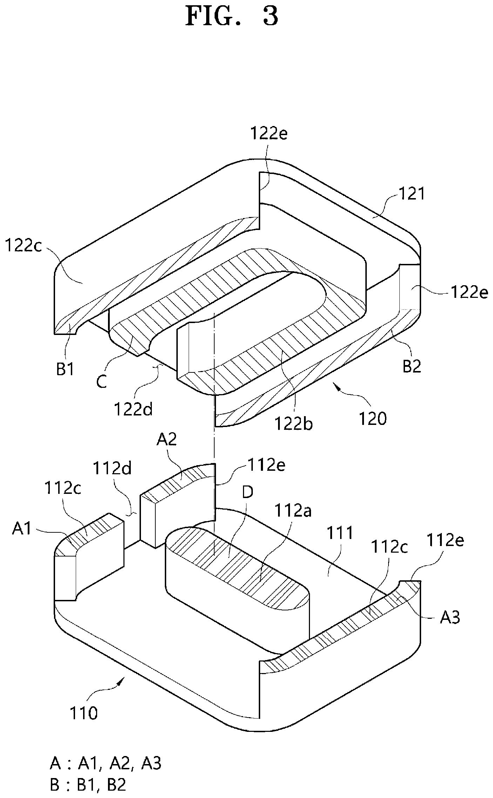

That is, as illustrated in FIG. 3, at least one end of both ends of the outer wall 112c formed in the first body 110 in the longitudinal direction may make close contact with an end of the outer wall 122c formed in the second body 120, to form the single outer wall 112c and 122c.

Referring to FIGS. 3 to 7, the second body 120 may include the middle wall 122b and a remaining part 122c of the outer wall 112c and 122c protruding in a preset direction (from an upper side to a lower side in FIG. 3) from the base 121, and may be overlapped with and combined to the first body 110.

In some embodiments, the middle wall 122b may be formed to protrude in the center of the second body 120, and the outer wall 122c may be formed to protrude in the outside of the middle wall 122b.

A pair of the outer walls 122c may be provided in the second body 120, and may be arranged in parallel on both sides of the middle wall 122b.

That is, a pair of the outer walls 122c may be arranged in parallel in the second body 120.

In some embodiments, as described above, the first wire may be wound between the inner wall 112a formed in the first body 110 and the middle wall 122b formed in the second body 120, and the second wire may be wound between the middle wall 122b and the outer walls 112c and 122c formed in the first body 110 and the second body 120.

In some embodiments, the outer wall 122c formed in the second body 120 may be formed as a part that is parallel with the longitudinal direction among the outer walls 112c and 122c in a plane view.

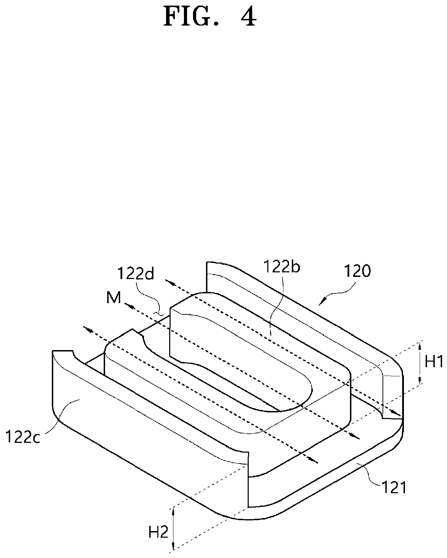

Referring to FIG. 4, a pair of the outer walls 122c may be provided in the second body 120 and be arranged on both sides based on the middle wall 122b.

That is, as a pair of the outer walls 122c formed in the second body 120 may be arranged on both sides of the middle wall 122b, the outer wall may not be formed on the front and rear sides of the middle wall 122b and the direction of the front side to the rear side of the middle wall 122b may be defined as the milling direction M, and thus, there is an effect that the milling process is performed to the middle wall 122b without interferences caused by the outer wall.

In another aspect, the pair of outer walls 122c formed in the second body 120 may be formed in parallel with the milling direction M.

In some embodiments, when the first body 110 and the second body 120 are combined with each other to form the transformer core 100, the outer wall 112c formed in the first body 110 may be arranged on the front and rear sides of the middle wall 122b formed in the second body 120.

In the present invention, a pair of outer walls 112c formed in the first body 110 may be arranged on the front and rear sides based on the middle wall 122b and a pair of outer walls 122c formed in the second body 120 may be arranged on both sides based on the middle wall 122b, but the present invention is not limited thereto and various modifications are possible, such that a pair of outer walls 112c formed in the first body 110 are arranged on both sides based on the middle wall 122b and a pair of outer walls 122c formed in the second body 120 are arranged on the front and rear sides based on the middle wall 122b.

In some embodiments, the inner wall 112a, the middle wall 122b, and the outer wall 112c or 122c of the transformer core 100 that is formed by combining the first and second bodies 110 and 120 may be formed in a cuboidal or cylindrical shape with curved edges when viewed in a plane.

In some embodiments, when the first body 110 and the second body 120 are combined with each other, the inner circumferential surface of the corners of the outer walls 112c and 122c may be formed to be curved. In some embodiments, the inner wall 112a may be formed to have the greatest thickness among the inner wall 112a, the middle wall 122b, and the outer wall 112c and 122c.

In some embodiments, entrances 112d and 122d through which the first wire and the second wire enter and exit may be formed by partially cutting off the outer wall 112c and 122c and the middle wall 122b.

In some embodiments, the entrances 112d and 122d may be formed in the same direction on the outer wall 112c and 122c and the middle wall 122b.

In some embodiments, the entrances 112d and 122d formed on the first body 110 and the second body 120, respectively, may have the same width.

Referring to FIG. 3, the outer circumferential surface of the inner wall 112a facing the entrance 112d may be formed to be curved according to an embodiment of the present invention. As a result, there is an effect that the first wire surrounding the inner wall may move smoothly.

Referring to FIG. 3, an exploded perspective view of the transformer core 100 according to an embodiment of the present invention is illustrated.

The transformer core 100 according to an embodiment of the present invention may be completed by combining the first body 110 and the second body 120 with each other as shown in FIG. 3.

The first body 110 has an entire inner wall 112a and a portion of the outer wall 112cformed on the base 111 and the second body 120 may have an entire middle wall 122b and a portion of the outer wall 122c formed on the base 121.

The first body 110 and the second body 120 may be combined with each other such that the bases 111 and 121 are positioned on the outside.

In some embodiments, each base 111 and 121 of the first body 110 and the second body 120 may be arranged to face each other such that the outer wall 112c and 122c, the inner wall 112a, and the middle wall 122b are arranged therebetween.

In some embodiments, as the partition walls 112a, 122b, 112c, and 122c formed in each body 110 and 120 are formed in such a way that they are not overlapped with each other, when they are combined with each other, the ends of the partition walls of each body 110 and 120 may make close contact with the bases 111 and 121 of the opposite bodies 110 and 120 with being in surface contact.

That is, when combined, the end of the inner wall 112a of the first body 110 may make close contact with the base 121 of the second body 120, and the end of the middle wall 122b of the second body 120 may make close contact with the base 111 of the first body 110.

For example, when combined, the end of the outer wall 112c of the first body 110 and the end of the outer wall 122c of the second body 120 may make close contact with each other's opposite bases 111 and 121, and the side ends of the outer wall 112c and 122c may also make close contact with each other when combined.

The first body 110 and the second body 120 may be combined in this way, and as a result, to complete the transformer core 100 in such a configuration that the bases 111 and 121 are placed up and down, the inner wall 112a, the outer wall 112c and 122c, and the middle wall 122b are formed therebetween, and the first wire and the second wire may be wound between each partition wall as described above.

In some embodiments, the entrances 112d and 122d may be formed in the middle wall 122b and the outer wall 112c, so that the first wire and the second wire may be drawn out to the outside.

According to an embodiment of the present invention, the outer wall 112c of the first body 111 may include a first outer wall having a first upper side surface A1, a second outer wall having a second upper side surface A2, and a third outer wall having a third upper side surface A3.

The first upper side surface A1, the second upper side surface A2, and the third upper side surface A3, which are provided in the first outer wall, the second outer wall, and the third outer wall, respectively, may be formed to have the same area in a height direction.

In some embodiments, a first surface A of the outer wall 112c of the first body 111 may include the first upper side surface A1, the second upper side surface A2, and the third upper side surface A3.

An area of the first surface A of the outer wall 112c of the first body 111 may be defined as a first area. The first area may be the same as the sum of the area of the first upper side surface A1, the area of the second upper side surface A2, and the area of the third upper side surface A3.

The outer wall 112c of the second body 121 may include a fourth outer wall having a fourth upper side surface B1, a fifth outer wall having a fifth upper side surface B2, and a sixth outer wall having the sixth upper side surface B3.

In some embodiments, the second surface B of the outer wall 122c of the second body 121 may include the fourth upper side surface B1, the fifth upper side surface B2, and the sixth upper side surface B3.

The area of the second surface B of the outer wall 122c of the second body 121 may be defined as the second area. The second area may be the same as the sum of the area of the fourth upper side surface B1, the area of the fifth upper side surface B2, and the area of the sixth upper side surface B3.

The area of a third surface C of the middle wall 122b may be defined as a third area.

The area of a fourth surface D of the inner wall 112a may be defined as a fourth area.

In some embodiments, the sum of the first area, the second area, and the third area may be greater than the fourth area.

Accordingly, as the sum of the first area, the second area, and the third area is greater than the fourth area, the transformer core 100 according to an embodiment of the present invention may control the leakage inductance, to thereby improve the efficiency of the transformer.

Furthermore, a corner 112e of the outer wall 112c of the first body 110 may contact a corner 122e of the outer wall 122c of the second body 120. Accordingly, the outer wall 112c of the first body 110 and the outer wall 122c of the second body 120 may be electromagnetically connected to each other, to thereby prevent changes in the characteristics of the transformer.

Referring to FIG. 4, a perspective view of the second body 120, which is a component of the transformer core according to an embodiment of the present invention, is illustrated.

Both the first body 110 and the second body 120 are shown to be in a form capable of the milling process.

Referring to FIG. 3, in case of the first body 110, the inner wall 112a and the outer wall 112c may be sufficiently spaced apart and it is sufficiently possible for the milling process to be performed between the inner wall 112a and the outer wall 112c.

In some embodiments, a pair of the outer walls 112c may be provided in the first body 110 and be arranged at the front side and the rear side of the inner wall 112a in the milling direction M shown in FIG. 4 in parallel with each other.

For example, open spaces may be provided at both sides of the inner wall 112a in the milling direction M, and the milling process may be possibly performed against the inner wall 112a in a direction perpendicular to the milling direction M.

Referring to FIG. 4, in case of the second body 120, the outer wall 122c may be open along the milling direction M and the outer wall 122c and the middle wall 122b may be approximately parallel with each other in the longitudinal direction, to thereby show that the milling process is possibly performed in the milling direction M.

That is, a portion of the middle wall 122b may be formed to be in parallel with a portion of the outer wall 122c of the second body 120.

In contrast, in the conventional case, when performing the milling process in the milling direction, the space between the partition walls may be very narrow, and even if the tool blade is inserted into the space between the partition walls, the tool blade may be caught on the outer wall, etc., so that the milling process is either impossible or inefficient, and as a result, other process methods may have to be selected. FIG. 4 shows that it is possible for the milling process to be performed.

In some embodiments, the outer wall 122c and the middle wall 122b of the second body 120 may be formed to protrude from the base 121.

The height of the middle wall 122b protruding from the base 121 may be defined as a first height H1. The height of the outer wall 122c of the second body 120 protruding from the base 121 may be defined as a second height H2.

In some embodiments, the first height H1 may be relatively smaller than the second height H2. Accordingly, as the first height H1 is smaller than the second height H2, the transformer core according to an embodiment of the present invention may control the leakage inductance, to thereby improve the efficiency of the transformer.

In some embodiments, the space between the third surface C of the middle wall 122b and the middle wall 122b may determine a main inductance and the leakage inductance.

As the first height H1 is relatively smaller than the second height H2, when the third area C (see FIG. 3) of the middle wall 122b is made wider, there is an advantage in that the fourth area D (see FIG. 3) of the inner wall 112a (see FIG. 3) may be designed narrower.

In some embodiments, when the third area C (see FIG. 3) of the middle wall 122b is widened, there is an advantage of generating the required leakage inductance even if the space in the middle wall 122b is reduced.

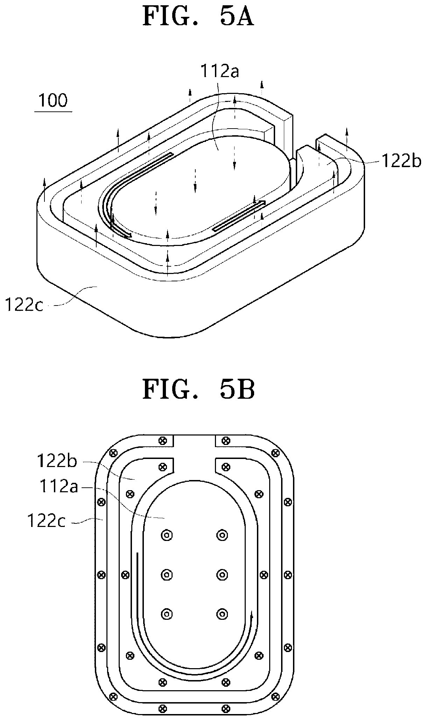

Referring to FIG. 5, an operational view is illustrated with showing the direction of the magnetic flux according to the current flow in the first wire of the transformer core 100 according to an embodiment of the present invention. FIG. 5A shows a perspective view which is in the state with the bases 111 and 121 removed, and FIG. 5B shows a cross-sectional view. When the first wire between the inner wall 112a and the middle wall 122b rotates counterclockwise around the inner wall 112a, the magnetic flux of the inner wall 112a may face upward and the magnetic flux of the middle wall 122b and the outer walls 112c and 122c may face downward.

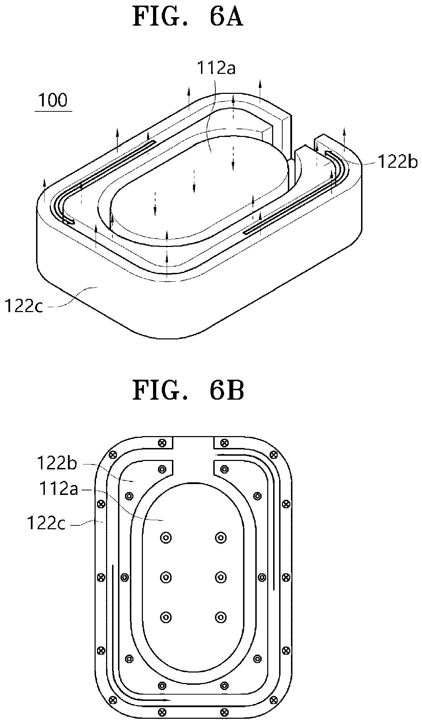

Referring to FIG. 6, an operational view is illustrated with showing the direction of magnetic flux according to the current flow in the second wire of the transformer core 100 according to an embodiment of the present invention.

As a drawing like to FIG. 5, when the second wire between the middle wall 122b and the outer walls 112c and 122c rotates counterclockwise around the middle wall 122b, the magnetic flux of the inner wall 112a and the middle wall 122b may face upward and the magnetic flux of the outer walls 112c and 122c may face downward.

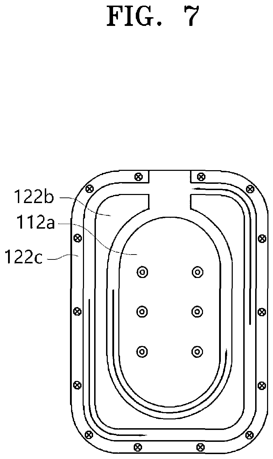

Referring to FIG. 7, an operational view is illustrated with showing the direction of the magnetic flux according to the current flow in both the first wire and the second wire of the transformer core 100 according to an embodiment of the present invention.

When the first wire rotates counterclockwise around the inner wall 112a and the second wire rotates counterclockwise around the middle wall 122b, the magnetic flux of the middle wall 122b may be offset to thereby make the leakage inductance created. In some embodiments, the size of the leakage inductance may be determined depending on the gap of the middle wall 122b.

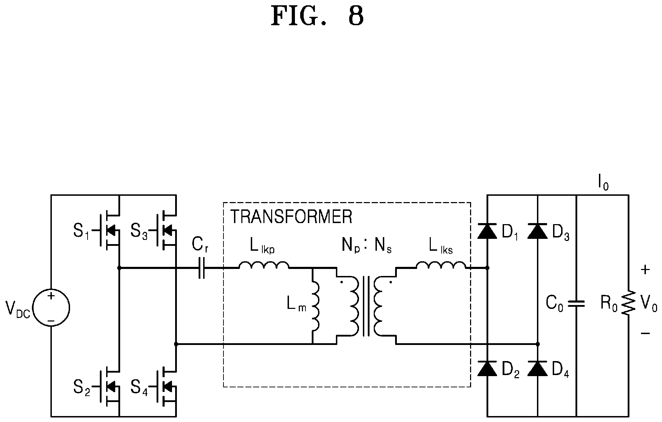

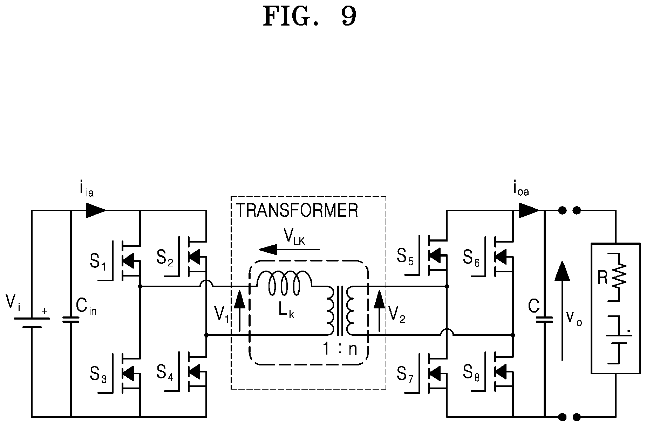

Referring to FIGS. 8 and 9, an example of a circuit diagram to which the transformer core 100 according to an embodiment of the present invention is applied is illustrated. The leakage inductance described above may be used in an LLC inductance or in an inverter utilizing the transformer and the inductance. FIG. 8 is an equivalent circuit of an LLC resonant converter and the transformer, and FIG. 9 shows that it is applied to a dual active bridge converter.

Although not illustrated in the drawing, a solar power system may include a solar module and a gateway. The solar module may include a solar cell module and a power converter (not shown in the drawing) for converting direct current power generating from the solar cell module into alternating current power and outputting the alternating current power.

The transformer core according to an embodiment of the present invention is provided in the power converter and specific configurations of the gateway and the power converter is known to the those skilled in the art, so that detailed descriptions on the gateway and the power converter will be omitted.

Although the embodiments of the present invention have been described, the spirit of the present invention is not limited to the embodiments presented in this specification, and those skilled in the art who understand the spirit of the present invention will be able to easily propose other embodiments by adding, changing, deleting, or supplementing components within the scope of the same spirit, but this will also be considered to fall within the spirit of the present invention.

### Industrial Applicability

According to the present invention, it is provided that the transformer core, the power converter including the transformer core, and the solar module including the same. Furthermore, embodiments of the present invention may be applied to the solar power systems capable of producing solar power for industrial uses.

## Claims

1. A transformer core including a body in which an inner wall, a middle wall, and an outer wall are formed from a center, a first wire is wound between the inner wall and the middle wall, and a second wire is wound between the middle wall and the outer wall, the transformer core comprising:
a first body in which the inner wall and a portion of the outer wall protrude from a base; and
a second body in which the middle wall and a remaining portion of the outer wall protrude from a base, the second body being overlapped with the first body to thereby be combined to the first body.

2. The transformer core of claim 1, wherein
an area of a first surface of the outer wall of the first body is defined as a first area,
an area of a second surface of the outer wall of the second body is defined as a second area,
an area of a third surface of the middle wall is defined as a third area,
an area of a fourth surface of the inner wall is defined as a fourth area, and
a sum of the first area, the second area, and the third area is relatively greater than the fourth area.

3. The transformer core of claim 1, wherein
the outer wall and the middle wall of the second body are formed to protrude from the base,
a height of the middle wall protruding from the base is defined as a first height,
a height of the outer wall of the second body protruding from the base is defined as a second height, and
the first height is relatively smaller than the second height.

4. The transformer core of claim 1, wherein
a portion of the middle wall is formed to be in parallel with a portion of the outer wall of the second body.

5. The transformer core of claim 1, wherein
a pair of the outer walls are provided in the second body and arranged at both sides of the middle wall in parallel therewith.

6. The transformer core of claim 5, wherein
a pair of the outer walls are provided in the first body and arranged at a front side and a rear side of the middle wall formed in the second body in parallel therewith, when the first body and the second body are combined to each other.

7. The transformer core of claim 1, wherein
a pair of the outer walls are provided in the second body and arranged at a front side and a rear side of the middle wall in parallel therewith.

8. The transformer core of claim 7, wherein
a pair of the outer walls are provided in the first body and arranged at both sides of the middle wall formed in the second body in parallel therewith when the first body and the second body are combined.

9. The transformer core of claim 1, wherein
the inner wall has a greatest thickness among the inner wall, the middle wall, and the outer wall.

10. The transformer core of claim 1, wherein
heights of the outer walls formed on each of the first body and the second body are the same.

11. The transformer core of claim 1, wherein
an entrance through which the first wire and the second wire enter and exit is formed by partially cutting off the outer wall and the middle wall.

12. The transformer core of claim 11, wherein
the entrance is formed in the same direction at the outer wall and the middle wall.

13. The transformer core of claim 12, wherein
a width of the entrance at the outer wall is the same as a width of the entrance at the middle wall.

14. The transformer core of claim 11, wherein
an outer circumferential surface of the inner wall facing the entrance is formed to be curved.

15. The transformer core of claim 1, wherein
a corner of the outer wall of the first body contacts a corner of the outer wall of the second body.

16. The transformer core of claim 1, wherein,
in a state that the first body and the second body are combined with each other, an inner circumferential surface of the corner of the outer wall is formed to be curved.

17. The transformer core of claim 1, wherein
a portion of the outer wall of the first body and a portion of the outer wall of the second body are arranged at a right angle with respect to each other.

18. A power converter comprising the transformer core of any one of claims 1 to 17.

19. The power converter of claim 18, further comprising:
a first wire wound between the inner wall and the middle wall formed in the transformer core; and
a second wire wound between the middle wall and the outer wall formed in the transformer core.

20. A solar module comprising the power converter of claim 18.
